# EUROPÄISCHE PATENTANMELDUNG

(11) **EP 0 668 501 A1**
(43) Veröffentlichungstag der Anmeldung: **23.08.1995**
(21) Anmeldenummer: 94250041.4
(22) Anmeldetag: 22.02.1994
(51) Int. Cl.: G01N 27/30

(54) **Bezugselektrode für einen elektrochemischen Dreielektrodensensor**

(71) Anmelder: Compur Monitors Sensor Technology GmbH, D-81539 München (DE)
(72) Erfinder: Braden, Christoph, D-50937 Köln (DE); Deprez, Jacques, D-50226 Frechen (DE); Gojowczik, Martina, D-40789 MonHeim (DE)
(74) Vertreter: Wagner, Karl H., Dipl.-Ing.

(57) **Zusammenfassung**

Die Erfindung betrifft eine Bezugselektrode für einen elektrochemischen Dreielektrodensenor, bestehend aus einem Schaft (1) mit einer darin eingebetteten Platinelektrode (2).

Erfindungsgemäß ist die Platinelektrode (2) ganz oder teilweise mit Platin-Oxid (3) beschichtet und diese Oxidschicht sowie ggf. auch freie Flächen der Elektrode sind vollständig mit einer Polyhydantoinschicht überzogen.

## Beschreibung

Die Erfindung betrifft eine Bezugselektrode für einen elektrochemischen Dreielektrodensensor, der im wesentlichen aus einem Schaft mit einer darin eingebetteten Platinelektrode besteht.

Bei den meisten elektrochemischen Dreielektrodensensoren wird eine Luftelektrode als Bezugssystem eingesetzt, die einfach zu realisieren und für die meisten Anwendungen auch ausreichend stabil ist. Eine solche Luftelektrode ist z.B. beschrieben in US 3 909 386. Der Einsatz ist aber auf Anwendungsfälle begrenzt, bei denen ein ausreichender Sauerstoffpartialdruck vorhanden ist. Außerdem reagieren Luft-Bezugselektroden auf eine Reihe von anderen Gasen ebenfalls mit Potentialschwankungen. Dies stellt eine systematische Fehlerquelle dar, die man durch konstruktive Maßnahmen zu beheben versucht, deren vollständige Beseitigung jedoch erfahrungsgemäß mit Schwierigkeiten verbunden ist.

Hier setzt die Erfindung an. Es liegt die Aufgabe zugrunde, eine vom Sauerstoffpartialdruck unabhängige Bezugselektrode im Zuge der Verbesserung von elektrochemischen Dreielektrodensensoren für die Messung von Sauerstoff und für Gasmessungen in einer sauerstofffreien Umgebung zu entwickeln.

Diese Aufgabe wird - ausgehend von einer Bezugselektrode, bestehend aus einem Schaft mit einer darin eingebetteten Platinelektrode, - erfindungsgemäß dadurch gelöst, daß die Platinelektrode ganz oder teilweise mit Platin-Oxid (Pt0₂) beschichtet ist und die Pt0₂-Schicht und gegebenenfalls auch die Pt0₂-freie Fläche der Elektrode vollständig mit einer Polyhydantoinschicht überzogen wird.

Vorteilhaft ist bereits die Pt0₂-Schicht mit Polyhydantoin als Bindemittel versetzt.

Gemäß einer bevorzugten Ausführung der Erfindung beträgt die Dicke der Pt0₂-Schicht 50 um bis 500 um, vorzugsweise 150 um bis 300 um. Die Dicke der Polyhydantoinschicht liegt zweckmäßig im Bereich von 100 um bis 700 um, vorzugsweise im Bereich von 300 um bis 600 um.

Mit der Erfindung werden folgende Vorteile erzielt:
- Die Polyhydantoinbeschichtung ermöglicht die Herstellung von langzeitstabilen Pt/Pt0₂-Bezugselektroden mit einem Potential von 950 mV SHS.
- Das neue Bezugssystem für elektrochemische Dreielektrodensensoren ist unabhängig vom Sauerstoffpartialdruck und damit für den Einsatz in Dreielektrodensauerstoffmeßzetlen und für Messungen von Gaskomponenten in einer sauerstofffreien Atmosphäre geeignet.
- Durch die Polyhydantoinbeschichtung wird neben der mechanischen Stabilisierung auch eine optimale Benetzung der Bezugselektrode erreicht. Eine systematische Fehlerquelle besteht häufig darin, daß das zu messende Gas an der Arbeitselektrode nur unvollständig umgesetzt wird und dann zum Bezugssystem diffundiert und dort Potentialschwankungen hervorruft, die zu fehlerhaften Meßsignalen führen. Aufgrund der durch die Polyhydantoinbeschichtung gewährleisteten vollständigen Benetzung der Bezugselektrode werden solche Fehler um Größenordnungen unterdrückt, so daß das Bezugssystem praktisch unempfindlich gegen Gasschlüsse in der Meßzelle ist.
- Darüber hinaus wurde eine verkürzte Einlaufzeit (Ansprechzeit) der Bezugselektrode beobachtet.
- Die neuen Bezugselektroden lassen sich fertigungstechnisch mit verhältnismäßig geringem Aufwand herstellen und weisen dabei nur eine geringe Exemplarstreuung auf (hohe Reproduzierbarkeit).

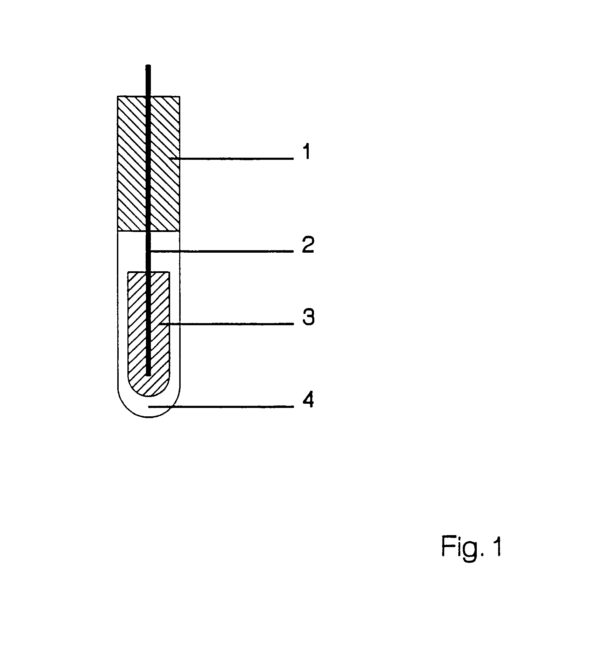

Im folgenden wird ein Ausführungsbeispiel der Erfindung anhand einer Zeichnung näher erläutert. Die in der Zeichnung schematisch dargestellte Bezugselektrode besteht aus einem Kunststoffschaft 1, in den eine Platinelektrode 2 in Form eines Platindrahtes oder Platinbleches eingebettet ist. An ihrem freien Ende ist die Platinelektrode 2 auf einem Teil ihrer Länge mit einer 200 um dicken Pt0₂-Schicht 3 umgeben. Die Beschichtung erfolgt z.B. elektrochemisch (galvanisch) oder durch mechanisches Pressen des Pt0₂-Pulvers. Ein solches Pt/Pt0₂-Bezugssystem wäre jedoch elektrochemisch und auch mechanisch nicht ausreichend stabil. Durch eine zusätzliche Beschichtung der Pt0₂- umhüllten Platinelektrode mit Polyhydantoin kann beim Eintauchen der Bezugselektrode in den Elektrolyt der Meßzelle eine optimale Benetzung, eine mechanische Fixierung und eine Stabilisierung gegen eine Auflösung der Pt0₂-Schicht erreicht werden. Polyhydantoin ist ein Kunststofflack, der durch Polyaddition von aromatischen Diisocyanaten an 1,3-Phenylen-bis(iminoessigsäureethylester) hergestellt wird und als Handelsprodukt erhältlich ist. Polyhydantoin wird in wäßrigen Lösungen angelöst (Quellung). Eine geschlossene Schicht aus Polyhydantoin bleibt jedoch trotzdem für wäßrige Lösungen undurchlässig. In Kontakt mit wäßrigen Elektrolyten besitzt Polyhydantoin aufgrund dieser Eigenschaften eine Leitfähigkeit von ca. 500 mS, was bei Bezugselektroden vollkommen ausreicht. Die Polyhydantoinschicht 4 wird durch Tauchen oder Sprühen aufgebracht. Sie umschließt auch den nicht mit Pt0₂ beschichteten Teil der Platinelektrode 2. Die Dicke der Polyhydantoinschicht 4 beträgt z.B. 400 um. Das Aufbringen der Pt0₂-Schicht 3 kann dadurch erleichtert werden, daß das Pt0₂-Pulver ebenfalls mit Polyhydantoin als Bindemittel versetzt wird.

Aufgrund des einfachen Aufbaus lassen sich solche Bezugselektroden relativ einfach und preisgünstig herstellen. Die kompakte Bauform ermöglicht auch den Einsatz in Miniaturmeßzellen.

## Patentansprüche

1. Bezugselektrode für einen elektrochemischen Dreielektrodensensor, bestehend aus einem Schaft (1) mit einer darin eingebetteten Platinelektrode (2), dadurch gekennzeichnet, daß die Platinelektrode (2) ganz oder teilweise mit Platin-Oxid (3) beschichtet ist und die Platin-Oxidschicht (3) und gegebenenfalls auch die verbleibende Platin-Oxid freie Fläche der Elektrode (2) vollständig mit einer Polyhydantoinschicht (4) überzogen ist.

2. Bezugselektrode nach Anspruch 1, dadurch gekennzeichnet, daß die Platin-Oxidschicht (3) Polyhydantoin als Bindemittel enthält.

3. Bezugselektrode nach Anspruch 1 oder 2, dadurch gekennzeichnet, daß die Dicke der Platin-Oxidschicht (3) 50 um bis 500 um, vorzugsweise 150 um bis 300 um, beträgt.

4. Bezugselektrode nach den Ansprüchen 1 bis 3, dadurch gekennzeichnet, daß die Dicke der Polyhydantoinschicht (4) 100 um bis 700 um, vorzugsweise 300 um bis 600 um, beträgt.
